# EUROPÄISCHE PATENTSCHRIFT

(11) **EP 2 431 977 B1**
(45) Veröffentlichungstag und Bekanntmachung des Hinweises auf die Patenterteilung: **06.12.2017**
(21) Anmeldenummer: 11179611.6
(22) Anmeldetag: 31.08.2011
(51) Int. Cl.: G05D 1/02, G21C 17/013

(54) **Roboterplattform zur Ferngesteuerten und/oder selbständigen Inspektion von Technischen Einrichtungen**
Robot platform for remotely controlled and/or autonomous inspection of technical facilities
Plateforme robotique pour l'inspection télécommandée et/ou autonome de dispositifs techniques

(30) Priorität: 20.09.2010 CH 15202010
(43) Veröffentlichungstag der Anmeldung: 21.03.2012
(73) Patentinhaber: General Electric Technology GmbH, 5400 Baden (CH)
(72) Erfinder: Zesch, Wolfgang, 5210 Windisch (CH); Wiesendanger, Markus, 8006 Zürich (CH)
(74) Vertreter: General Electric Technology GmbH

(56) Entgegenhaltungen:
- US-A- 6 104 970
- US-A1- 2002 190 682
- US-A1- 2008 148 876

## Beschreibung

### TECHNISCHES GEBIET

Die vorliegende Erfindung bezieht sich auf das Gebiet der automatisierten Inspektion von grosstechnischen Einrichtungen wie z.B. Gas- oder Dampfturbinen, Kesseln oder Tanks. Sie betrifft eine Vorrichtung gemäss dem Oberbegriff des Anspruchs 1.

### STAND DER TECHNIK

Unterschiedliche Inspektions- und Wartungsarbeiten in grosstechnischen Einrichtungen wie zum Beispiel Kraftwerken erfordern, wenn diese Arbeiten in von aussen schwer zugänglichen Bereichen durchgeführt werden sollen, unterschiedliche Arten von Robotern, die speziell auf den jeweiligen Einsatzzweck hin in sehr begrenzter Zahl konstruiert und gebaut werden müssen. Es ist daher sehr zeitaufwändig und kostenintensiv, solche Roboter für einen bestimmten Einsatzzweck von Grund auf zu entwickeln und zu bauen. Werden solche Roboter von aussen gesteuert, sind dafür dicke und schwere Versorgungskabel notwendig, welche den Roboter mit einer entsprechenden Aussenstation verbinden, um Steuerungssignale und Strom an den Roboter zu übertragen und Positionsmeldungen vom Roboter an die Aussenstation zu übermitteln (siehe z.B. die Druckschriften US 6,104,970 oder US 2008148876 A1). Aus dem Dokument US 2002/0190682 A1 ist eine Inspektionsvorrichtung für Rohrleitungen bekannt, welche aus einzelnen mittels Kupplungen miteinander verbundenen Modulen besteht, die es gestatten Biegungen und Abzweigungen im Rohrsystem zu folgen. Dabei werden nach unterschiedliche Standards zum Austausch bzw. zur Übermittlung der Daten arbeitende Kommunikationsmittel verwendet.

Es sind zwar Inspektionssysteme kommerziell erhältlich, die es erlauben, auf einer Plattform aufbauend unterschiedliche Sensoren für unterschiedliche Einsatzzwecke zu tragen (z.B. der Scanner "Magman" der Firma Phoenix Inspection Systems Ltd. oder das Robotersystem ZR-1 der Firma Zetec, Inc.), jedoch ist der Einsatzbereich auch bei diesen flexibel einsetzbaren Systemen beschränkt. Zudem ist auch bei diesen Systemen eine Vielzahl von unterschiedlichen Kabelverbindungen notwendig, um Daten, Steuersignale und Energie zwischen der eigentlichen Inspektionseinheit und einer externen Steuer- und Auswerteeinheit zu übertragen. Dazu gehört insbesondere die separate Übertragung von verschiedenen Sensordaten aus der Positionsbestimmung von Einheit und Sensoren, die störanfällig ist und wegen der zugehörigen Kabel die Bewegungsfreiheit der Einheit deutlich beschränkt.

### DARSTELLUNG DER ERFINDUNG

Es ist eine Aufgabe der Erfindung, eine Vorrichtung für ein Inspektionssystem zu schaffen, welches die Nachteile bekannter Inspektionseinheiten vermeidet und sich durch eine wesentliche Erweiterung der Anpassbarkeit an unterschiedliche Inspektionsaufgaben und -szenarien sowie eine stark vereinfachte und störungssichere Datenkommunikation auszeichnet.

Die Aufgabe wird durch die Gesamtheit der Merkmale des Anspruchs 1 gelöst.

Die erfindungsgemässe Vorrichtung zur ferngesteuerten und/oder selbständigen Inspektion von technischen Einrichtungen in Kraftwerken umfasst eine Roboterplattform und eine Auswerteeinheit, wobei die Roboterplattform aus einzelnen Modulen aufgebaut ist und wenigstens Antriebsmittel für die Fortbewegung der Roboterplattform, Inspektionsmittel für die Inspektion der technischen Einrichtung, Mittel zur Ermittlung von Positionsdaten der Roboterplattform sowie Kommunikationsmittel zum Austausch von Mess- und/oder Steuerdaten zwischen den Modulen und Übermittlung von Mess- und Positionsdaten an dieAuswerteeinheit. Sie zeichnet sich dadurch aus, dass die Kommunikationsmittel nach einem einheitlichen Standard arbeiten, und dass die Mess- und Positionsdaten durch Streaming mit einer Zeitverzögerung von weniger als 1 ms an die Auswerteeinheit geschickt werden können, so dass die Zeitverzögerung ausreichend gering für eine fehlerfreie Auswertung ist.

Eine Ausgestaltung der erfindungsgemässen Vorrichtung ist dadurch gekennzeichnet, dass die einzelnen Module konstruktiv durch mechanische Verbindungsmittel und/oder zum Austausch von Daten durch digitale Kommunikationsverbindungen miteinander verbunden sind, welche nach einem einheitlichen Standard arbeiten.

Gemäss einer anderen Ausgestaltung arbeiten die digitalen Kommunikationsverbindungen nach dem Ethernet-Standard. Wichtig ist dabei die schnelle, latenzarme Übertragung der Positionssignale bzw. Positionsdaten, um ein Verfälschen der Messung, d.h. der Zuordnung von Inspektionssignalen zu den jeweiligen Positionssignalen zu vermeiden.

Eine weitere Ausgestaltung der erfindungsgemässen Vorrichtung ist dadurch gekennzeichnet, dass die digitalen Kommunikationsverbindungen zusätzlich Mittel zur Stromversorgung der Module umfassen.

Gemäss einer anderen Ausgestaltung umfassen einzelne Module jeweils ein oder mehrere Submodul(e).

Insbesondere ist eines der Submodule ein Interface für den Datenaustausch und die Stromversorgungsverbindung zwischen den Modulen.

Eine weitere Ausgestaltung ist dadurch gekennzeichnet, dass einzelne Module einen elektrischen Antriebsmotor sowie eine integrierte Steuereinheit für den elektrischen Antriebsmotor aufweisen, welche Steuereinheit als Submodule ein Leistungs-Submodul und ein Mikrocontroller-Submodul umfassen.

Gemäss einer anderen Ausgestaltung ist wenigstens eines der Module ein Antriebsmodul für die Fortbewegung der Roboterplattform.

Eine Weiterbildung dieser Ausgestaltung ist dadurch gekennzeichnet, dass das wenigstens eine Antriebsmodul einen elektrischen Antriebsmotor, insbesondere einen Gleichstrommotor, aufweist und als Submodule wenigstens ein Magnetrad zum Abrollen und Anhaften an einer magnetisierbaren Oberfläche der zu inspizierenden technischen Einrichtung, ein Leistungs-Submodul für die Stromversorgung des Antriebsmotors und ein Mikrocontroller-Submodul für die Steuerung des elektrischen Antriebsmotors umfasst.

Eine andere Ausgestaltung der Erfindung ist dadurch gekennzeichnet, dass eines der Module als Linearbewegungs-Modul zum linearen Verfahren von daran angeordneten Inspektionsmitteln ausgebildet ist.

Eine weitere Ausgestaltung der Erfindung zeichnet sich dadurch aus, dass mindestens eines der Module zur Bestimmung der Position der Roboterplattform ausgebildet ist.

Eine Weiterbildung dieser Ausgestaltung ist dadurch gekennzeichnet, dass zur Bestimmung der Position ein Positionsgeber-Submodul vorgesehen ist, welches ein Positionsgeber-Rad und eine Encodereinheit umfasst.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Blockschema den Aufbau einer modularen Roboterplattform gemäss einem Ausführungsbeispiel der Erfindung;
- Fig. 2: in einer perspektivischen Ansicht eine Roboterplattform mit zwei Antriebsmodulen und einem Linearbewegungs-Modul gemäss einem anderen Ausführungsbeispiel der Erfindung;
- Fig. 3: die Roboterplattform aus Fig. 2 in der Seitenansicht;
- Fig. 4: den Aufbau eines Antriebsmoduls aus der Roboterplattform gemäss Fig. 2 mit einem darin befindlichen Gleichstrommotor, einem Mikrocontroller-Submodul und einem Leistungs-Submodul für die Versorgung des Gleichstrommotors;
- Fig. 5: das Linearbewegungs-Modul aus Fig. 2 für sich alleine genommen;
- Fig. 6: das Leistungs-Submodul aus Fig. 4 für sich alleine genommen;
- Fig. 7: das Mikrocontroller-Submodul aus Fig. 4 für sich alleine genommen;
- Fig. 8: in der Seitenansicht ein Positionsgeber-Submodul für die Bestimmung der Position der Roboterplattform; und
- Fig. 9: in einer perspektivischen Darstellung eine um eine vertikale Drehachse drehbaren Lenkrolle zur Unterstützung der Beweglichkeit der Roboterplattform.

### WEGE ZUR AUSFÜHRUNG DER ERFINDUNG

Die vorliegende Erfindung schlägt eine Vorrichtung vor mit einer Auswerteeinheit und einer Roboterplattform vor, die als modulares System ausgelegt ist und daher, je nach Auswahl und Zusammenbau der einzelnen Module, den unterschiedlichsten Einsatzzwecken angepasst werden kann. Dieses modulare System zeichnet sich durch die folgenden Eigenschaften und Vorteile aus:
- das System besteht aus einer begrenzten Anzahl von grundlegenden Modulen und wird ergänzt durch anwendungsspezifische Teile wie zum Beispiel Sensoren
- in den grundlegenden Modulen ist, so weit nötig, eine Steuereinheit integriert, die für den Betrieb des Moduls die notwendige lokale Intelligenz bereitstellt
- jedes Modul hat ein standardisiertes Interface für die Verbindung mit anderen Modulen beziehungsweise mit einer ausserhalb des Inspektionsortes befindlichen, für die Bedienung notwendigen Basiseinheit
- jedes Modul hat, so weit nötig, einen Anschluss für die Stromversorgung
- der Datenaustausch zwischen den Modulen erfolgt vorzugsweise nach dem Ethernet-Standard
- die Roboterplattform weist Mittel zur Positionsbestimmung auf, wobei die Positionsdaten in Echtzeit über das Ethernet übertragen und ausgewertet werden
- die für die Inspektion notwendigen Sensoren sind ebenfalls als Module ausgelegt um mehr Autonomie, Robustheit und Flexibilität zu ermöglichen
- die Modularität existiert auf mehreren hierarchisch geordneten Systemebenen, das heisst, innerhalb eines Moduls können sich mehrere Submodule befinden, die in ihrer speziellen Zusammenstellung den Charakter des Moduls bestimmen.

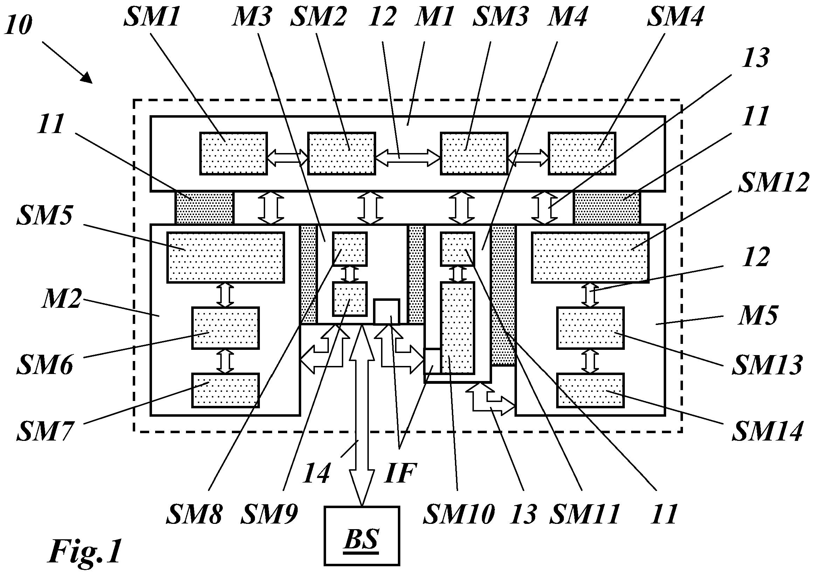

Fig. 1 zeigt in einem Blockschema den Aufbau einer modularen Roboterplattform gemäss einem Ausführungsbeispiel der Erfindung. Die (gestrichelt angedeutete) Roboterplattform 10 der Fig. 1 umfasst mehrere grundlegende Module M1-M5, die zur Bildung der Roboterplattform 10 untereinander durch nicht näher spezifizierte, in Fig. 1 schattiert angedeutete, konstruktive Verbindungsmittel 11 (zum Beispiel Schraubverbindungen) untereinander verbunden sind. Jedes der Module M1-M5 umfasst seinerseits mehrere Submodule SM1-SM14, die für Aufbau und Funktion des jeweiligen Moduls charakteristisch sind.

Die Module M1-M5 können untereinander über standardisierte Kommunikationsverbindungen 13, die vorzugsweise nach dem Ethernet-Standard arbeiten, direkt Daten austauschen. Um diesen Datenaustausch zu ermöglichen, sind in den Modulen M1-M5 entsprechende Interfaces IF vorgesehen. Wenn nötig, können auch die Submodule SM1-SM14 in den einzelnen Modulen M1-M5 über entsprechende Kommunikationsverbindungen 12 Daten austauschen. Weiterhin besteht eine Kommunikationsverbindung 14 zwischen der Roboterplattform 10 und einer Basisstation BS, über die Befehle an die Roboterplattform 10 gesendet und Positionsdaten von der Roboterplattform 10 empfangen werden können.

Durch den modularen Aufbau der Roboterplattform 10 und die internen Kommunikationsmöglichkeiten per Ethernet zwischen den Modulen und Submodulen ist in der Roboterplattform 10 selbst genügend Intelligenz vorhanden, um Steuerungs-, Regelungs- und Messvorgänge selbständig intern durchführen zu können, ohne einen störungsempfindlichen Datenaustausch mit der Basisstation BS abwickeln zu müssen.

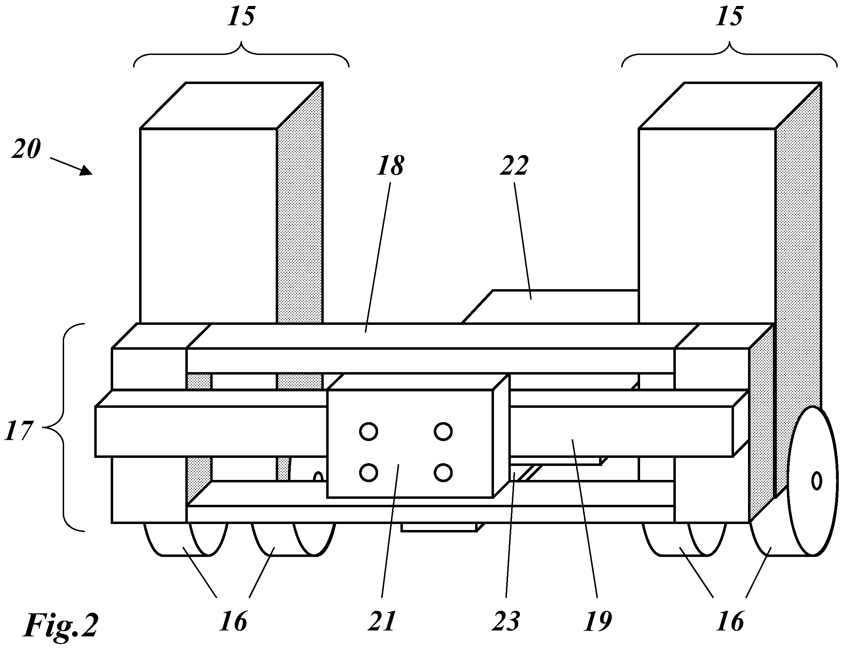

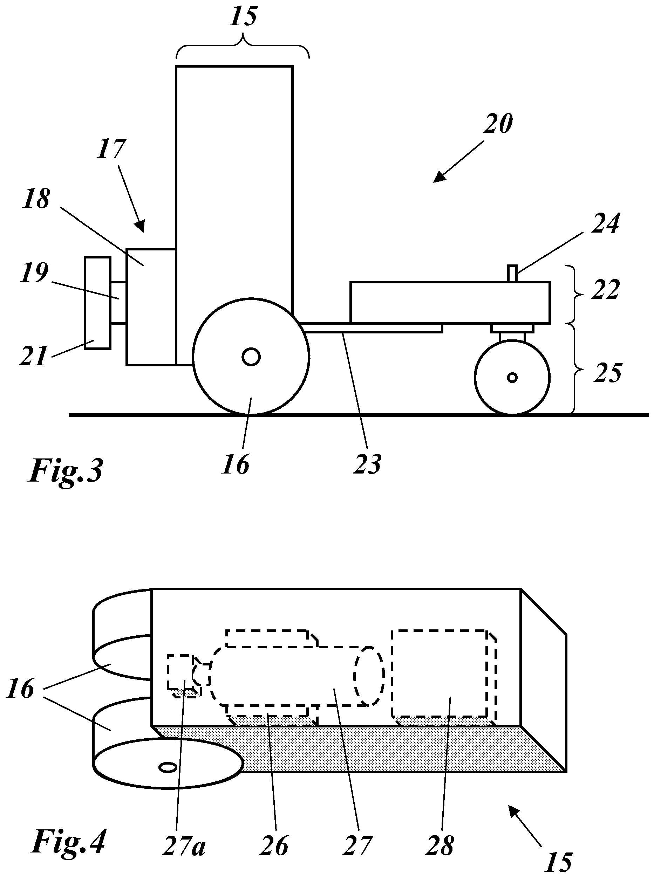

Ein Beispiel für eine nach diesen Prinzipien aufgebaute, konkrete Roboterplattform ist in Fig. 2 dargestellt. Die dortige Roboterplattform 20 umfasst zwei gleichartige, im Abstand voneinander angeordnete Antriebsmodule 15, die für die gesteuerte Bewegung der Roboterplattform 20 zuständig sind. Fig. 4 zeigt ein einzelnes solches Antriebsmodul 15.

Das Antriebsmodul 15 ist als längliches Modul mit einer weitgehend quaderförmigen Geometrie ausgebildet und weist am einen Ende ein Paar Magneträder 16 auf, die so ausserhalb der Mitte angeordnet sind, dass das Antriebsmodul 15 sowohl in vertikaler Position als auch in horizontaler Position zum Vortrieb in einer Roboterplattform eingesetzt werden kann. Die Magneträder 16 rollen einerseits auf einer Unterlage ab, wenn die Roboterplattform auf dieser Unterlage bewegt wird. Andererseits sorgen die Magneträder 16 innerhalb des Antriebsmoduls 15 dafür, dass die Roboterplattform an der Unterlage haftet, sofern die Unterlage ferromagnetisch ist. Auf diese Weise kann eine Roboterplattform beispielsweise um eine Rotorwelle einer Turbine herum bewegt werden, ohne herunterzufallen oder abzurutschen.

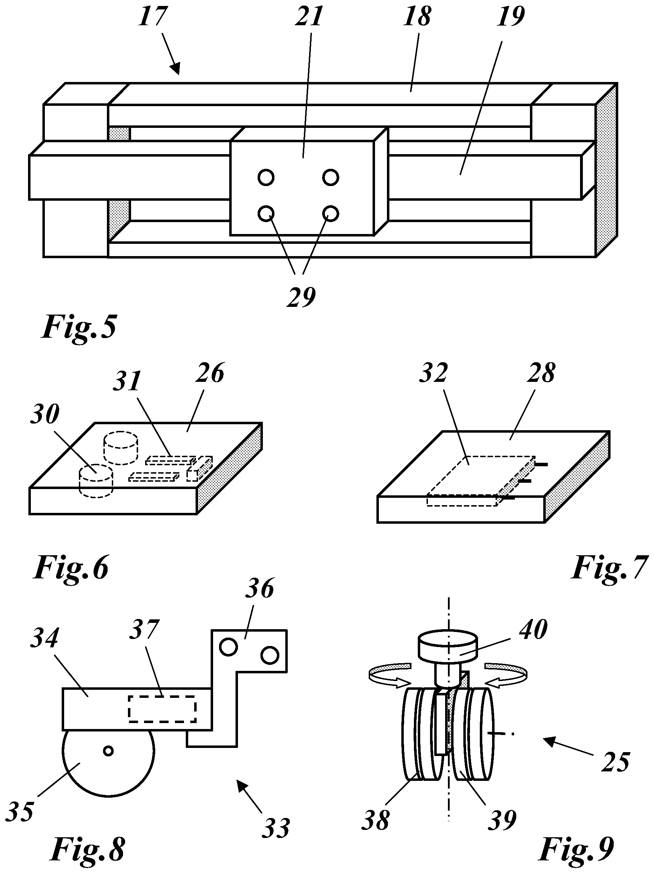

Im Inneren des Antriebsmoduls 15 ist ein Gleichstrommotor 27 angeordnet, der über ein Getriebe 27a die Magneträder 16 antreibt. Für die Versorgung des Gleichstrommotors 27 mit Strom ist ein Leistungs-Submodul 26 vorgesehen (siehe auch Fig. 6), das beispielsweise als PCB ausgebildet sein kann und die für den Antrieb des Motors notwendigen elektronischen Bauelemente (Leistungshalbleiter, Kondensatoren, Widerstände etc.) enthält. Neben dem Leistungs-Submodul 26 ist weiterhin ein Mikrocontroller-Submodul 28 mit einem Mikrocontroller 32 im Antriebsmodul 15 untergebracht. Dieses Submodul steuert den Betrieb des Gleichstrommotors 27 nach Massgabe der gemessenen Ist-Position und der gewünschten Soll-Position der Roboterplattform 20. Im einfachsten Fall kann an den Magneträdern 16 selbst ein entsprechender Encoder angebracht sein, der die Umdrehung der Räder misst und entsprechende Daten an den Mikrocontroller 32 abgibt. Ausserdem kann das Mikrocontroller-Submodul 28 weitere Datenein- und Ausgänge zur Verfügung stellen, um z.B. Schalter oder Sensordaten einzulesen oder Anzeigelemente anzusteuern. Solche Zusatzfunktionalitäten können einfach über das auf Mikrocontroller 32 laufende Steuerprogramm erreicht werden.

Soll bei der Positionsbestimmung der mit einem Schlupf verbundene Fehler vermieden werden, kann die Roboterplattform 20 gemäss Fig. 8 mit einem eigenständigen Positionsgeber-Submodul 33 ausgerüstet werden, das mit einem speziellen Positionsgeber-Rad 35 die zurückgelegte Strecke weitgehend schlupffrei aufnimmt und über eine im Chassis 34 untergebrachte Encodereinheit 37 als Positionsdaten zur Verfügung stellt das Positionsgeber-Submodul 33 kann mittels eines universellen Befestigungselements 36 an einer geeigneten Stelle der Roboterplattform angebracht werden. Der Mikrocontroller 32 ist so ausgelegt, dass er diese zusätzlichen Signale ohne grossen Aufwand einlesen und verarbeiten oder weiterleiten kann. Neben der drastischen Reduktion des Positionierfehlers kann damit auch eine Schlupfüberwachung implementiert werden und das übergeordnete Programm oder der Bediener entsprechend gewarnt werden.

Die beiden voneinander beabstandeten Antriebsmodule 15 sind in der Roboterplattform 20 der Fig. 2 beziehungsweise Fig. 3 untereinander durch ein Linearbewegungs-Modul 17 fest verbunden. Das in Fig. 5 separat dargestellte Linearbewegungs-Modul 17 hat einen länglichen Rahmen, der auf der Vorderseite eine in Längsrichtung verlaufende Linearführung 19 aufweist. Auf dieser Linearführung 19 ist ein Schlitten 21 längsverschieblich angeordnet. Der Schlitten 21 ist für den Anbau von Sensoreinheiten ausgelegt und dafür mit entsprechenden Befestigungslöchern (29 in Fig. 5) ausgestattet. Der Schlitten 21 kann mittels eines im Linearbewegungs-Modul 17 untergebrachten, in Fig. 2 nicht dargestellten, Motors verfahren werden, so dass mit dem darauf montierten Sensor ein Abfahren quer zur Fahrtrichtung möglich ist. Auch in diesem Fall sind in dem Modul entsprechende Submodule 26 und 28 für den Betrieb des Motors untergebracht.

Wie aus Fig. 3 ersichtlich ist, enthält die Roboterplattform 20 als weiteres Modul eine Elektronikbox 22, in der elektronische Schaltungen, die für den Betrieb der Roboterplattform insgesamt notwendig sind, untergebracht sind. Die Elektronikbox 22 kann - wie die anderen Module auch - Anschlussbuchsen 24 aufweisen, an die entsprechende Kabel für die Datenübertragung angeschlossen werden können.

Im vorliegenden Fall ist auf der Unterseite der Elektronikbox 22 als weiteres Modul eine (passive) Lenkrolle 25 montiert, welche die Roboterplattform 20 im Bereich der auskragenden Elektronikbox 22 beweglich abstützt. Wie in Fig. 9 dargestellt, weist die Lenkrolle 25 zwei parallel angeordnete Räder 38 und 39 auf, die mittels einer Drehlagerung 40 um eine vertikale Achse drehbar gelagert sind. Eine solche Rolle kann mit Vorteil auch zum Lenken der Roboterplattform 20 eingesetzt werden, wenn sie mit einem entsprechenden Servomodul kombiniert wird. Eine andere Möglichkeit der Lenkung ergibt sich durch eine unterschiedliche Ansteuerung der beiden Antriebsmodule 15.

Die Kommunikationsverbindungen 12-14 können leitungsgebunden sein. Es ist aber auch denkbar, bestimmte Kommunikationsverbindungen drahtlos auszuführen, wenn dies insbesondere aus Platzgründen oder aus Gründen der Beweglichkeit von Vorteil ist.

Insgesamt zeichnet sich eine modulare Roboterplattform für die Inspektion und Wartung von technischen Einrichtungen gemäss der Erfindung dadurch aus, dass
- sie wenigstens eine Antriebseinheit mit einer integrierten Steuerelektronik aufweist,
- sie Mittel zur Positionsbestimmung der Roboterplattform umfasst,
- die einzelnen Module standardisierte digitale Schnittstellen zum intermodularen Datenaustausch aufweisen, und
- die Positionsdaten der Einheit für die weitere Verwendung ausserhalb der Regelschleife des Motorantriebs über ein digitales Interface nach draussen übertragen und für weitere Zwecke zur Verfügung gestellt werden.

### BEZUGSZEICHENLISTE

- 10,20: Roboterplattform (modular)
- 11: Verbindungsmittel
- 12-14: Kommunikationsverbindung (Ethernet)
- 15: Antriebsmodul
- 16: Magnetrad
- 17: Linearbewegungs-Modul
- 18: Rahmen
- 19: Linearführung
- 21: Schlitten
- 22: Elektronikbox
- 23: Verbindungselement
- 24: Anschlussbuchse
- 25: Lenkrolle
- 26: Leistungs-Submodul
- 27: Elektromotor (Gleichstrommotor)
- 27a: Getriebe
- 28: Mikrocontroller-Submodul
- 29: Befestigungsloch
- 30,31: Bauelement (elektronisch)
- 32: Mikrocontroller
- 33: Positionsgeber-Submodul
- 34: Chassis
- 35: Positionsgeber-Rad
- 36: Befestigungselement
- 37: Encodereinheit
- 38,39: Rad
- 40: Drehlagerung
- BS: Basisstation
- IF: Interface (z.B. Ethernet)
- M1-M5: Modul
- SM1-SM14: Submodul

## Patentansprüche

1. Vorrichtung zur ferngesteuerten und/oder selbständigen Inspektion von technischen Einrichtungen in Kraftwerken , wobei die Vorrichtung eine Roboterplattform (10, 20) und eine Auswerteeinheit umfasst, wobei die Roboterplattform (10,20) aus einzelnen Modulen aufgebaut ist und wenigstens Antriebsmittel (15) für die Fortbewegung der Roboterplattform (10, 20), Inspektionsmittel (17, 33) für die Inspektion der technischen Einrichtung, Mittel (33) zur Ermittlung von Positionsdaten der Roboterplattform (10, 20) sowie Kommunikationsmittel (12-14, IF) zum Austausch von Mess- und/oder Steuerdaten zwischen den Modulen und zur Übermittlung von Mess- und Positionsdaten an die Auswerteeinheit umfasst, **dadurch gekennzeichnet, dass** die Kommunikationsmittel (12-14) nach einem einheitlichen Standard arbeiten, und dass die Mess- und Positionsdaten durch Streaming mit einer Zeitverzögerung von weniger als 1 ms an die Auswerteeinheit geschickt werden können.

2. Vorrichtung nach Anspruch 1, **dadurch gekennzeichnet, dass** die einzelnen Module (M1-M5; 15, 17, 25, 33) konstruktiv durch mechanische Verbindungsmittel (11) und/oder zum Austausch von Daten durch digitale Kommunikationsverbindungen (12-14) miteinander verbunden sind, welche nach einem einheitlichen Standard arbeiten.

3. Vorrichtung nach Anspruch 2, **dadurch gekennzeichnet, dass** die digitalen Kommunikationsverbindungen (12-14) nach dem Ethernet-Standard arbeiten.

4. Vorrichtung nach Anspruch 2 oder 3, **dadurch gekennzeichnet, dass** die digitalen Kommunikationsverbindungen (12-14) zusätzlich Mittel zur Stromversorgung der Module (M1-M5; 15, 17, 25, 33) umfassen.

5. Vorrichtung nach einem der Ansprüche 2-4, **dadurch gekennzeichnet, dass** einzelne Module (M1-M5; 15, 17, 33) jeweils ein oder mehrere Submodul(e) (SM1-SM14; 16, 26, 28, 37, IF) umfassen.

6. Vorrichtung nach Anspruch 5, **dadurch gekennzeichnet, dass** eines der Submodule (SM1-SM14; 16, 26, 28, 37, IF) ein Interface (IF) für den Datenaustausch und die Stromversorgungsverbindung zwischen den Modulen ist.

7. Vorrichtung nach Anspruch 5 oder 6, **dadurch gekennzeichnet, dass** einzelne Module einen elektrischen Antriebsmotor (27) sowie eine integrierte Steuereinheit für den elektrischen Antriebsmotor (27) aufweisen, welche Steuereinheit als Submodule ein Leistungs-Submodul (26) und ein Mikrocontroller-Submodul (28) umfassen.

8. Vorrichtung nach einem der Ansprüche 2-7, **dadurch gekennzeichnet, dass** wenigstens eines der Module (M1-M5; 15, 17, 25, 33) ein Antriebsmodul (15) für die Fortbewegung der Roboterplattform (10, 20) ist.

9. Vorrichtung nach Anspruch 8, **dadurch gekennzeichnet, dass** das Antriebsmodul (15) einen elektrischen Antriebsmotor aufweist und als Submodule wenigstens ein Magnetrad (16) zum Abrollen und Anhaften an einer magnetisierbaren Oberfläche der zu inspizierenden technischen Einrichtung, ein Leistungs-Submodul (26) für die Stromversorgung des Antriebsmotors (27) und ein Mikrocontroller-Submodul (32) für die Steuerung des elektrischen Antriebsmotors (27) umfasst.

10. Vorrichtung nach einem der Ansprüche 2-7, **dadurch gekennzeichnet, dass** eines der Module (M1-M5; 15, 17, 25, 33) als Linearbewegungs-Modul (17) zum linearen Verfahren von daran angeordneten Inspektionsmitteln ausgebildet ist.

11. Vorrichtung nach einem der Ansprüche 2-7, **dadurch gekennzeichnet, dass** mindestens eines der Module (M1-M5; 15, 17, 25, 33) zur Bestimmung der Position der Roboterplattform (10, 20) ausgebildet ist.

12. Vorrichtung nach Anspruch 11, **dadurch gekennzeichnet, dass** zur Bestimmung der Position ein Positionsgeber-Submodul (33) enhalten ist, welches ein Positionsgeber-Rad (35) und eine Encodereinheit (37) umfasst.

## Claims

1. Device for remotely controlled and/or autonomous inspection of technical facilities in power stations, wherein the device comprises a robot platform (10, 20) and an evaluation unit, wherein the robot platform (10, 20) is formed from individual modules and comprises at least drive means (15) for movement of the robot platform (10, 20), inspection means (17, 33) for inspection of the technical facility, means (33) for determination of position data of the robot platform (10, 20), and communication means (12-14, IF) for interchanging measurement and/or control data between the modules and for transmission of measurement and position data to the evaluation unit, **characterized in that** the communication means (12-14) operate in accordance with a uniform standard, and **in that** the measurement and position data can be sent by streaming to the evaluation unit with a time delay of less than 1 ms.

2. Device according to Claim 1, **characterized in that** the individual modules (M1-M5; 15, 17, 25, 33) are physically connected to one another by mechanical connecting means (11) and/or for interchanging data by digital communication links (12-14), which operate in accordance with a uniform standard.

3. Device according to Claim 2, **characterized in that** the digital communication links (12-14) operate in accordance with the Ethernet standard.

4. Device according to Claim 2 or 3, **characterized in that** the digital communication links (12-14) additionally have means for supplying power to the modules (M1-M5; 15, 17, 25, 33).

5. Device according to one of Claims 2-4, **characterized in that** individual modules (M1-M5; 15, 17, 33) each have one or more submodules (SM1-SM14; 16, 26, 28, 37, IF).

6. Device according to Claim 5, **characterized in that** one of the submodules (SM1-SM14; 16, 26, 28, 37, IF) is an interface (IF) for data interchange and the power supply link between the modules.

7. Device according to Claim 5 or 6, **characterized in that** individual modules have an electric drive motor (27) and an integrated control unit for the electric drive motor (27), which control unit has a power submodule (26) and a microcontroller submodule (28) as submodules.

8. Device according to one of Claims 2-7, **characterized in that** at least one of the modules (M1-M5; 15, 17, 25, 33) is a drive module (15) for movement of the robot platform (10, 20).

9. Device according to Claim 8, **characterized in that** the drive module (15) has an electric drive motor and, as submodules, has at least one magnet wheel (16) for rolling on and sticking to a surface, which can be magnetized, of the technical facility to be inspected, a power submodule (26) for supplying power to the drive motor (27), and a microcontroller submodule (32) for controlling the electric drive motor (27).

10. Device according to one of Claims 2-7, **characterized in that** one of the modules (M1-M5; 15, 17, 25, 33) is in the form of a linear movement module (17) for linear movement of inspection means arranged on it.

11. Device according to one of Claims 2-7, **characterized in that** at least one of the modules (M1-M5; 15, 17, 25, 33) is designed to determine the position of the robot platform (10, 20).

12. Device according to Claim 11, **characterized in that** a position transmitter submodule (33) is included to determine the position, and has a position transmitter wheel (35) and an encoder unit (37).

## Revendications

1. Dispositif pour la commande à distance et/ou l'inspection autonome de dispositifs techniques dans des centrales, dans lequel le dispositif comprend une plateforme robotique (10, 20) et une unité d'évaluation, dans lequel la plateforme robotique (10, 20) est constituée de modules individuels et comprend au moins des moyens d'entraînement (15) destinés à déplacer la plateforme robotique (10, 20), des moyens d'inspection (17, 33) destinés à inspecter les dispositifs techniques, des moyens (33) destinés à déterminer des données de position de la plateforme robotique (10, 20) ainsi que des moyens de communication (12-14, IF) destinés à échanger des données de mesure et/ou de commande entre les modules et à transmettre des données de mesure et de position à l'unité d'évaluation, **caractérisé en ce que** les moyens de communication (12-14) fonctionnent conformément à une norme cohérente, et **en ce que** les données de mesure et de position peuvent être expédiées à l'unité d'évaluation par diffusion en flux avec un retard de moins de 1 ms.

2. Dispositif selon la revendication 1, **caractérisé en ce que** les modules individuels (M1-M5 ; 15, 17, 25, 33) sont reliés les uns aux autres de manière constructive par des moyens de liaison mécaniques (11) et/ou pour échanger des données par des liaisons de communication numériques (12-14) qui fonctionnent conformément à une norme cohérente.

3. Dispositif selon la revendication 2, **caractérisé en ce que** les liaisons de communication numériques (12-14) fonctionnent conformément à la norme Ethernet.

4. Dispositif selon la revendication 2 ou 3, **caractérisé en ce que** les liaisons de communication numériques (12-14) comprennent en outre des moyens pour alimenter en tension les modules (M1-M5 ; 15, 17, 25, 33).

5. Dispositif selon l'une quelconque des revendications 2-4, **caractérisé en ce que** des modules individuels (M1-M5 ; 15, 17, 33) comprennent respectivement un ou plusieurs sous-module(s) (SM1-SM14 ; 16, 26, 28, 37, IF).

6. Dispositif selon la revendication 5, **caractérisé en ce que** l'un des sous-modules (SM1-SM14 ; 16, 26, 28, 37, IF) est une interface (IF) destinée à l'échange de données et à l'établissement d'une liaison d'alimentation en tension entre les modules.

7. Dispositif selon la revendication 5 ou 6, **caractérisé en ce que** des modules individuels comportent un moteur électrique d'entraînement (27) ainsi qu'une unité de commande intégrée destinée au moteur électrique d'entraînement (27), laquelle unité de commande comprend en tant que sous-modules un sous-module de puissance (26) et un sous-module microcontrôleur (28).

8. Dispositif selon l'une quelconque des revendications 2-7, **caractérisé en ce qu'**au moins l'un des modules (M1-M5 ; 15, 17, 25, 33) est un module d'entraînement (15) destiné à déplacer la plateforme robotique (10, 20).

9. Dispositif selon la revendication 8, **caractérisé en ce que** le module d'entraînement (15) comporte un moteur électrique d'entraînement et comprend en tant que sous-modules au moins une roue magnétique (16) destinée à dérouler et à faire adhérer à une surface magnétisable les dispositifs techniques à inspecter, un sous-module de puissance (26) destiné à alimenter en tension le moteur d'entraînement (27) et un sous-module microcontrôleur (32) destiné à commander le moteur d'entraînement électrique (27).

10. Dispositif selon l'une quelconque des revendications 2-7, **caractérisé en ce que** l'un des modules (M1-M5 ; 15, 17, 25, 33) est réalisé en tant que module de déplacement linéaire (17) destiné à déplacer linéairement les moyens d'inspection disposés sur celui-ci.

11. Dispositif selon l'une quelconque des revendications 2-7, **caractérisé en ce qu'**au moins l'un des modules (M1-M5 ; 15, 17, 25, 33) est réalisé de manière à déterminer la position de la plateforme robotique (10, 20).

12. Dispositif selon la revendication 11, **caractérisé en ce qu'**il est prévu pour la détermination de la position un sous-module capteur de position (33) qui comprend une roue de détection de position (35) et une unité de codage (37).
